# EUROPÄISCHE PATENTANMELDUNG

(11) **EP 3 957 759 A1**
(43) Veröffentlichungstag der Anmeldung: **23.02.2022**
(21) Anmeldenummer: 21186160.4
(22) Anmeldetag: 16.07.2021
(51) Int. Cl.: C22B 1/00, C22B 11/00, C22B 11/06, C22B 3/10, C22B 7/00

(54) **VERFAHREN ZUR GEWINNUNG VON PLATIN UND/ODER RUTHENIUM**

(30) Priorität: 05.08.2020 DE 102020209881
(71) Anmelder: Robert Bosch GmbH, 70442 Stuttgart (DE)
(72) Erfinder: Kesel, Ingo, 71665 Vaihingen (DE); Diessner, Christian, 75417 Muehlacker-Muehlhausen (DE); Baldizzone, Claudio, 70174 Stuttgart (DE); Haemmerle, Fabian, 70199 Stuttgart (DE)

(57) **Zusammenfassung**

Die vorliegende Erfindung betrifft ein Verfahren zur Gewinnung von Platin und/oder Ruthenium. Dieses umfasst das Einbringen (11) mindestens eines Ausgangsmaterials (20), welches Platin und/oder Ruthenium sowie mindestens ein polyfluoriertes Polymer oder Copolymer enthält in Wasser oder eine wässrige erste Lösung (30), das Zerkleinern (12) des Ausgangsmaterials mittels Ultraschall (40) und das Einleiten (14) von Ozon (61) in eine Suspension, die das zerkleinerte Ausgangsmaterial (20) in einer wässrigen zweiten Lösung (50) enthält, in welcher Chlorwasserstoff (51) gelöst ist.

## Beschreibung

Die vorliegende Erfindung betrifft ein Verfahren zur Gewinnung von Platin und/oder Ruthenium. Dieses ist insbesondere dazu geeignet, Platin aus Brennstoffzellen zurückzugewinnen.

### Stand der Technik

Platin ist ein essentieller Rohstoff, der unter anderem in Membranelektrodeneinheiten (membrane electrode assembly; MEA) Verwendung findet. Diese stellen einen Kernbestandteil von Brennstoffzellen dar. Sie bestehen aus einer zentralen Polymermembran, zwei Katalysatorschichten pro Seite, in denen das Platin angeordnet ist, und zwei Kohlenstoffschichten pro Seite. Ein Brennstoffzellenstapel enthält mehr als 100 solcher MEAs. Ein Brennstoffzellenstapel besteht zu mehr als 80 Gew.-% aus Kohlenstoff, enthält aber dennoch circa 30 g Edelmetalle. Weiterhin enthält er das polyfluorierte Polymere PTFE und das polyfluorierte Copolymer PFSA.

Bei der hydrometallurgischen Rückgewinnung von Platin werden die zurückzugewinnenden Metalle durch Komplexbildung in eine wässrige Lösung gebracht. Ein Beispiel für ein solches Verfahren wird in dem Artikel N. Hodnik, C. Baldizzone, "Platinum recycling going green via induced surface potential alteration enabling fast and efficient dissolution" schließen, 2016, Nature Communications, Volume 7, beschrieben. Dabei kann aus einem Industriekatalysator Platin mit Chlorid als Komplexbildner in salzsaurer Lösung erfolgen. Dabei wird abwechselnd Ozon als Oxidationsmittel und Kohlenmonoxid als Reduktionsmittel eingesetzt, um so eine transiente Auflösung des Platins zu erreichen.

### Offenbarung der Erfindung

In dem Verfahren zur Gewinnung von Platin und/oder Ruthenium insbesondere von Platin ist vorgesehen, dass mindestens ein Ausgansmaterial, welches Platin und/oder Ruthenium sowie mindestens ein polyfluoriertes Polymer oder polyfluoriertes Copolymer enthält, in Wasser oder in eine wässrige Lösung eingebracht wird. In dem Wasser oder der wässrigen Lösung wird das Ausgangsmaterial mittels Ultraschall zerkleinert. Anschließend wird Ozon in eine Suspension eingeleitet, die das zerkleinerte Ausgangsmaterial in einer wässrigen zweiten Lösung enthält. In der zweiten Lösung ist Chlorwasserstoff gelöst. Die Anwendung von Ultraschall ermöglicht ein Trennen des Platins und/oder Rutheniums von anderen Bestandteilen des Ausgangsmaterials unter schonenden Bedingungen. Außerdem aktiviert die Ultraschallbehandlung die Oberfläche des Ausgangsmaterials, so dass dieses einfacher aufgelöst werden kann. Zudem ist es möglich, alle Verfahrensschritte im selben Reaktionsgefäß durchzuführen. Die erste Lösung enthält vorzugsweise maximal 10 Gew.-% mindestens eines Alkohols, insbesondere von Ethanol. Dieser Alkoholanteil kann auch in der zweiten Lösung enthalten sein. Während ohne die Anwendung von Ultraschall deutlich höhere Alkoholkonzentrationen notwendig wären um ionomere Bindemittel aufzulösen, welche einen platinbasierten und/oder rutheniumbasierten Katalysator beispielsweise in einem MEA mit den Kohlenstoffschichten und der Membran verbinden, ermöglicht es die Anwendung von Ultraschall, als erste wässrige Lösung eine Lösung mit einem derart niedrigen Alkoholgehalt oder sogar reines Wasser zu verwenden.

Bei dem Ausgangsmaterial kann es sich insbesondere um einen MEA handeln. Dieses kann als Ganzes ohne vorherige Zerkleinerung in dem Verfahren behandelt werden, da ein Zerkleinern durch die Ultraschallbehandlung stattfindet.

Zur Durchführung der Ultraschallbehandlung ist es bevorzugt, dass ein Reaktionsgefäß, in dem das Wasser oder die erste wässrige Lösung und das Ausgangsmaterial mittels Ultraschall behandelt werden, als Ultraschallbad ausgeführt ist. Weiterhin ist es bevorzugt, dass die Frequenz des Ultraschalls im Bereich von 16 kHz bis 60 kHz liegt. Solch eine niedrige Ultraschalfrequenz bewirkt die Bildung großer Blasen im Wasser oder in der ersten Lösung, wodurch ein hoher Druck und hohe Temperaturen auf das Ausgangsmaterial einwirken. Dadurch wird eine besonders effektive Zerkleinerung bewirkt.

Die zweite Lösung enthält vorzugsweise 0,05 mol/l bis 0,50 mol/l Chlorwasserstoff. Hiermit wird ein pH-Wert erhalten, welcher für die Oxidation von Platin und/oder Ruthenium mit Ozon optimal ist.

Weiterhin ist es bevorzugt, dass die zweite Lösung 0,5 mol/l bis 5,0 mol/l mindestens eines Alkalichlorids, insbesondere Natriumchlorid, enthält. Hierdurch wird die Konzentration von Chloridionen in der Lösung erhöht, um so große Mengen von Platin in Form von Hexachloroplatinat(IV)-Komplexen und/oder von Ruthenium in Form von Hexachlororuthenat(III)-Komplexen in der Lösung stabilisieren zu können.

Das in die zweite Lösung eingeleitete Ozon kann in dem Ausgangsmaterial enthaltendes Platin und/oder Ruthenium in saurer Lösung oberflächlich oxidieren. Dabei erfolgt eine transiente Auflösung von Platin und/oder Ruthenium unter Bildung eines löslichen Hexachloroplatinat(IV)-Komplexes und/oder Hexachloro-ruthenat(III)-Komplexes. Das Ozon wird vorzugsweise als Ozon/Sauerstoffgemisch in die zweite Lösung eingeleitet. Ein solches Gemisch kann in einfacher Weise mittels eines Ozonisators hergestellt werden.

Sobald das metallische Platin und/oder Ruthenium vollständig von einer Platinoxidschicht und/oder Rutheniumoxidschicht bedeckt ist, geht kein weiteres Platin und/oder Ruthenium mehr in Lösung. Um die Platinoxidschicht und/oder Rutheniumoxidschicht wieder zu reduzieren ist es bevorzugt, dass nach jedem Einleiten von Ozon ein Einleiten mindestens eines, insbesondere gasförmigen, Reduktionsmittels in die Suspension erfolgt. Bevorzugte Reduktionsmittel sind dabei Wasserstoff, Kohlenmonoxid, Schwefeldioxid und Gemische daraus. Das Einleiten von Ozon und das anschließende Einleiten des Reduktionsmittels wird dabei mehrfach wiederholt, um ein transientes Auflösungsverfahren durchzuführen, wie es beispielsweise von N. Hodnik, C. Baldizzone in dem oben erwähnten Artikel beschrieben wird.

Das Einleiten des Ozons und das Einleiten des Reduktionsmittels erfolgt vorzugsweise jeweils über einen Zeitraum, der für die beiden Einleitvorgänge unabhängig voneinander jeweils im Bereich von 30 Sekunden bis 30 Minuten liegt. Ein solcher Zeitraum reicht bei einem Katalysatormaterial, wie es üblicherweise in einem MEA verwendet wird aus, um die gesamte Platinoberfläche mit einer Platinoxidschicht und/oder die gesamte Rutheniumoxidoberfläche mit einer Rutheniumoxidschicht zu bedecken. In gleicher Weise reicht dieser Zeitraum üblicherweise aus, um die Oxidschicht vollständig zu reduzieren. Um das Platin und/oder Ruthenium aus der zweiten Lösung zu gewinnen, ist es bevorzugt, dass das zerkleinerte Ausgangsmaterial von der zweiten Lösung abgetrennt wird und das Platin und/oder Ruthenium anschließend reduktiv aus der zweiten Lösung gewonnen wird. Das Abtrennen kann dabei insbesondere durch Abfiltrieren erfolgen. Die reduktive Gewinnung kann insbesondere durch Einleiten eines, insbesondere gasförmigen, Reduktionsmittels wie beispielsweise Wasserstoff in die zweite Lösung erfolgen.

In einer ersten Ausführungsform des Verfahrens wird die zweite Lösung erhalten, indem Chlorwasserstoff in dem Wasser oder in der ersten Lösung gelöst wird. Diese Vorgehensweise hat den Vorteil, dass das Ausgangsmaterial nach dem Zerkleinern in der Flüssigkeit belassen werden kann, in welcher es zerkleinert wurde. Es ist lediglich erforderlich, Chlorwasserstoff in diese einzuleiten oder in Form von Salzsäure hinzuzufügen, woraufhin das Verfahren sofort im selben Reaktionsgefäß mit dem Einleiten von Ozon fortgesetzt werden kann.

In einer zweiten Ausführungsform des Verfahrens wird das zerkleinerte Ausgangsmaterial von dem Wasser oder der ersten Lösung abgetrennt und in die zweite Lösung überführt. Auch dieses Abtrennen kann insbesondere mittels Abfiltrieren erfolgen. Während in der ersten Ausführungsform Monomere des Polymers oder Copolymers, die sich im Wasser oder der ersten Lösung gelöst haben, in die zweite Lösung gelangen und dort den weiteren Behandlungen mit Oxidationsmitteln und Reduktionsmitten ausgesetzt werden, kann das Wasser oder die erste Lösung, welches beziehungsweise welche die Monomere enthält, in einem separaten Verfahrensschritt weiterverarbeitet werden. Dies kann vorzugsweise dazu genutzt werden, um die Monomere aus dem Wasser oder der ersten Lösung zurückzugewinnen und so ein Recycling des Polymers oder Copolymers zu ermöglichen.

### Kurze Beschreibungen der Zeichnungen

Ausführungsbeispiele der Erfindung sind in den Zeichnungen dargestellt und werden in der nachfolgenden Beschreibung näher erläutert.
Figur 1 zeigt ein Ablaufdiagramm eines Ausführungsbeispiels des erfindungsgemäßen Verfahrens.
Figur 2 zeigt schematisch einen Verfahrensschritt eines Ausführungsbeispiels des erfindungsgemäßen Verfahrens.
Figur 3 zeigt schematisch einen anderen Verfahrensschritt eines Ausführungsbeispiels des erfindungsgemäßen Verfahrens.

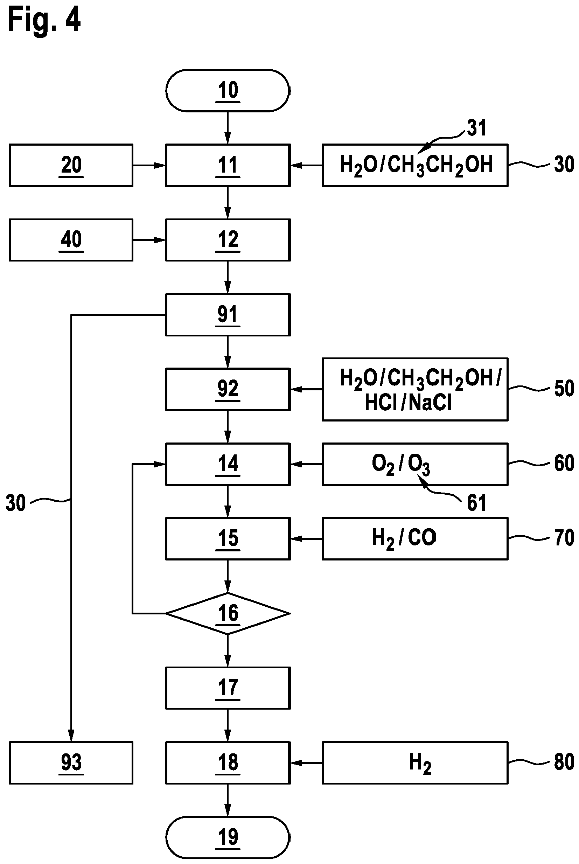

Figur 4 zeigt ein Ablaufdiagramm eines anderen Ausführungsbeispiels des erfindungsgemäßen Verfahrens.

### Ausführungsbeispiele der Erfindung

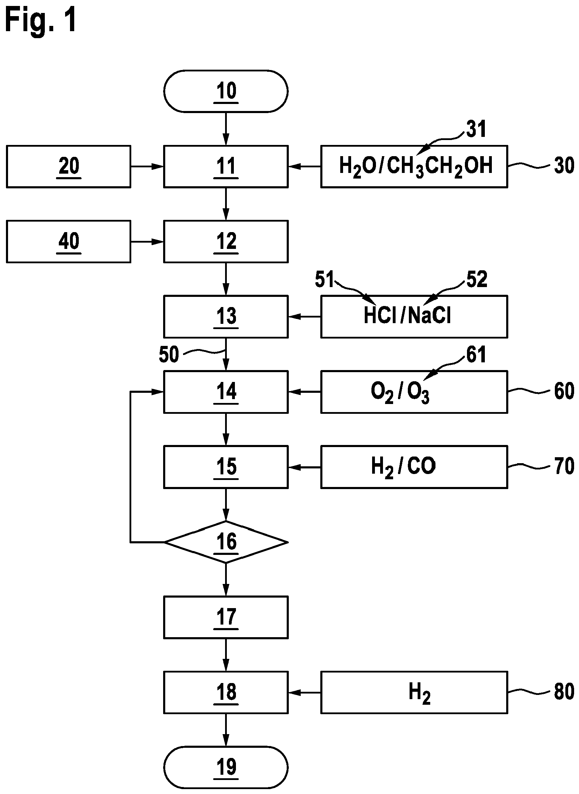

In einem ersten Ausführungsbeispiel des erfindungsgemäßen Verfahrens, das in Figur 1 dargestellt ist, soll nach dem Start 10 des Verfahrens Platin aus einem Ausgangsmaterial 20 gewonnen werden. Bei dem Ausgangsmaterial 20 handelt es sich um einen MEA, welcher neben dem Platin PTFE und PFSA enthält. Es erfolgt ein Einbringen 11 des Ausgangsmaterials 20 in eine wässrige Lösung 30, die 95 Gew.-% Wasser und 5 Gew.-% eines Alkohols 31 enthält. Bei dem Alkohol handelt es sich um Ethanol. Das Einbringen 11 erfolgt in einem Ultraschallbad.

Durch Einschalten des Ultraschallbades erfolgt eine Behandlung seines Inhalts mit Ultraschall 40, welcher eine Frequenz von 20 kHz aufweist. Dies bewirkt ein Zerkleinern 12 des Ausgangsmaterials 20, wonach dieses als Suspension in der ersten Lösung 30 vorliegt. Danach erfolgt ein Lösen 13 von Chlorwasserstoff 51 und Natriumchlorid als Alkalichlorid 52 in der ersten Lösung 30, sodass eine zweite Lösung 50 erhalten wird. Die Chlorwasserstoffkonzentration in der zweiten Lösung 50 beträgt 0,1 mol/l, sodass ihr pH-Wert 1 beträgt. Die Natriumchloridkonzentration in der zweiten Lösung 50 beträgt 1 mol/l, sodass sie 1,1 mol/l Chloridionen enthält.

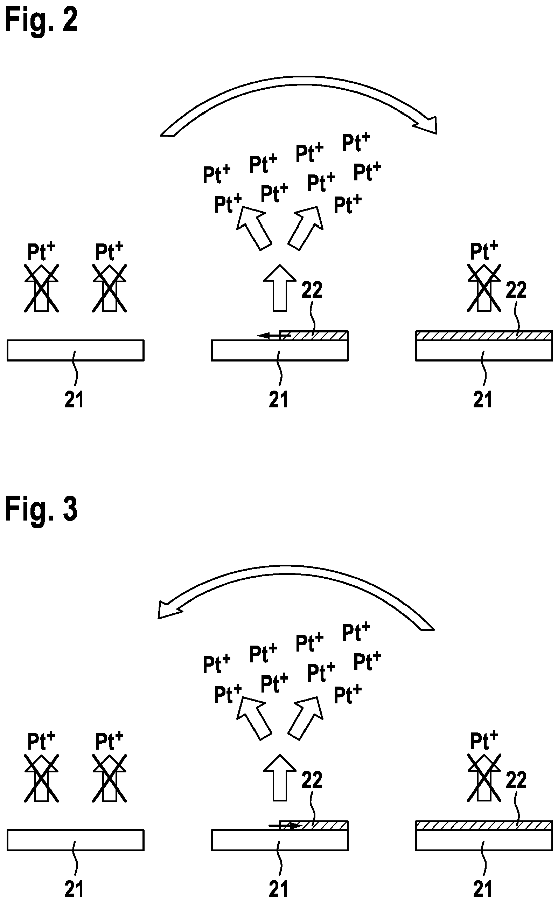

Zur transienten Gewinnung des Platins erfolgt ein Einleiten 14 eines Gemischs 60 aus Sauerstoff und Ozon 61 in die zweite Lösung 50. Das Gemisch wird mittels des Corona-Effekts erzeugt. Das Einleiten erfolgt über einen Zeitraum von 10 Minuten, wobei darauf geachtet wird, dass die Konzentration des Ozons 61 in der zweiten Lösung 50 nicht über 10 Gew.-% steigt. Wie in Figur 2 dargestellt ist, gehen bei Behandlung von metallischem Platin 21, welches durch das Zerkleinern 12 aus dem Ausgangsmaterial 20 herausgelöst wurde, mit dem Ozon 61 Platinkationen in Lösung, die sofort als Hexachloroplatinat(IV)-Komplexe stabilisiert werden. Dabei bildet sich auf der Oberfläche des Platins 21 allmählich eine Platinoxidschicht 22 bis die Oberfläche vollständig bedeckt ist und die Auflösung von Platin 21 endet.

Als nächstes erfolgt ein Einleiten 15 eines Reduktionsmittels 70 in Form eines Wasserstoff-/Kohlenmonoxid-Gemischs in die zweite Lösung 50. Dieses Einleiten 15 erfolgt ebenfalls über einen Zeitraum von 10 Minuten. Wie in Figur 3 dargestellt ist, beginnt das Reduktionsmittel 70 die Platinoxidschicht 22 zu reduzieren, wobei erneute Platinkationen in Lösung gehen. Die Reduktion endet, wenn die gesamte Platinoberfläche von Platinoxid 22 befreit wurde.

Es erfolgt ein mehrfaches Wiederholen des Einleitens 14 von Ozon 61 und des Einleitens 15 des Reduktionsmittels 70, wobei nach jedem Einleiten 15 des Reduktionsmittels 70 geprüft wird, ob das Platin 21 vollständig aufgelöst wurde. Dies kann im vorliegenden Ausführungsbeispiel dadurch erfolgen, dass geprüft wird ob eine vorgegebene Anzahl von Oxidations- und Reduktionszyklen durchlaufen wurde, nachdem mit der vollständigen Auflösung des Platins 21 gerechnet wird. Danach erfolgt ein Abtrennen 17 des zerkleinerten Ausgangsmaterials 20 von der zweiten Lösung 50, indem diese filtriert wird. Das Filtrat wird anschließend mit Wasserstoff 80 behandelt, um so das Platin 21 reduktiv aus der zweiten Lösung 50 auszufällen. Danach wird das Verfahren beendet 19.

In einem zweiten Ausführungsbeispiel des Verfahrens soll nicht nur das Platin aus dem MEA gewonnen werden, sondern es ist auch ein Recycling des PTFE und PFSA gewünscht. Hierzu werden nach dem Start 10 des Verfahrens die ersten beiden Verfahrensschritte 11, 12 in derselben Weise wie im ersten Ausführungsbeispiel durchgeführt. Anstatt nach dem Zerkleinern 12 des Ausgangsmaterials 20 jedoch wie im ersten Ausführungsbeispiel Chlorwasserstoff 51 und Alkalichlorid 52 in der ersten Lösung 30 zu lösen 13 erfolgt ein Abtrennen 91 des zerkleinerten Ausgangsmaterials 20 von der ersten Lösung 30, indem diese abfiltriert wird. Anschließend werden die zerkleinerten Ausgangsmaterialien 20 in eine zweite Lösung 50 überführt, welche 95 Gew.-% Wasser und 5 Gew.-% Ethanol als Alkohol 31 enthält, wobei 0,1 mol/l Chlorwasserstoff 51 und 1,0 mol/l Natriumchlorid als Alkalichlorid 52 in dem Wasser-/Ethanol-Gemisch gelöst sind. Die weiteren Verfahrensschritte 14 bis 19 werden dann wie im ersten Ausführungsbeispiel durchgeführt. Beim Zerkleinern 12 des Ausgangsmaterials 20 mittels des Ultraschalls 40 wurden die Polymerketten des PTFE und des PFSA zu Monomeren abgebaut. Diese sind nun in der ersten Lösung 30 gelöst. In einem separaten Reaktionsgefäß kann nun ein Gewinnen 93 der beiden unterschiedlichen Monomere aus der ersten Lösung 30 erfolgen, um diese zur erneuten Herstellung von PTFE und PFSA wiederverwenden zu können.

## Patentansprüche

1. Verfahren zur Gewinnung von Platin (21) und/oder Ruthenium, umfassend die folgenden Schritte:
a) Einbringen (11) mindestens eines Ausgangsmaterials (20), welches Platin (21) und/oder Ruthenium sowie mindestens ein polyfluoriertes Polymer oder Copolymer enthält in Wasser oder eine wässrige erste Lösung (30),
b) Zerkleinern (12) des Ausgangsmaterials (20) mittels Ultraschall (40), und
c) Einleiten (14) von Ozon (61) in eine Suspension, die das zerkleinerte Ausgangsmaterial (20) in einer wässrigen zweiten Lösung (50) enthält, in welcher Chlorwasserstoff (51) gelöst ist.

2. Verfahren nach Anspruch 1, **dadurch gekennzeichnet, dass** die erste Lösung (30) und/oder die zweite Lösung (50) maximal 10 Gew.-% mindestens eines Alkohols (31) enthält.

3. Verfahren nach Anspruch 1 oder 2, **dadurch gekennzeichnet, dass** die Frequenz des Ultraschalls (40) im Bereich von 16 kHz bis 60 kHz liegt.

4. Verfahren nach einem der Ansprüche 1 bis 3, **dadurch gekennzeichnet, dass** die zweite Lösung (50) 0,05 mol/l bis 0,50 mol/l Chlorwasserstoff (51) enthält.

5. Verfahren nach einem der Ansprüche 1 bis 4, **dadurch gekennzeichnet, dass** die zweite Lösung 0,5 mol/l bis 5,0 mol/l mindestens eines Alkalichlorids (52) enthält.

6. Verfahren nach einem der Ansprüche 1 bis 5, **dadurch gekennzeichnet, dass** Schritt c) mehrfach wiederholt wird (16), wobei nach jedem Schritt c) der folgende Schritt durchgeführt wird:
d) Einleiten (15) mindestens eines Reduktionsmittels (70) in die Suspension.

7. Verfahren nach Anspruch 6, **dadurch gekennzeichnet, dass** jede Durchführung von Schritt c) und Schritt d) über einen Zeitraum erfolgt, der jeweils unabhängig voneinander im Bereich von 30 Sekunden bis 30 Minuten liegt.

8. Verfahren nach einem der Ansprüche 1 bis 7, **dadurch gekennzeichnet, dass** das zerkleinerte Ausgangsmaterial (20) von der zweiten Lösung (50) abgetrennt wird (17) und das Platin (21) und/oder Ruthenium reduktiv aus der zweiten Lösung (50) gewonnen wird (18).

9. Verfahren nach einem der Ansprüche 1 bis 8, **dadurch gekennzeichnet, dass** die zweite Lösung (50) erhalten wird, indem Chlorwasserstoff (51) in dem Wasser oder der ersten Lösung (30) gelöst wird (13).

10. Verfahren nach einem der Ansprüche 1 bis 8, **dadurch gekennzeichnet, dass** das zerkleinerte Ausgangsmaterial (20) von dem Wasser oder der ersten Lösung (30) abgetrennt wird (91) und in die zweite Lösung (50) überführt wird (92).

11. Verfahren nach Anspruch 9, **dadurch gekennzeichnet, dass** Monomere des Polymers oder Copolymers aus dem Wasser oder der ersten Lösung (30) gewonnen werden (93).
